# EUROPEAN PATENT APPLICATION

(11) **EP 2 676 811 A1**
(43) Date of publication of application: **25.12.2013**
(21) Application number: 12747443.5
(22) Date of filing: 16.02.2012
(51) Int. Cl.: B60C 11/00, B60C 11/01

(54) **PNEUMATIC TIRE FOR MOTORCYCLE**

(30) Priority: 17.02.2011 JP 2011031923
(71) Applicant: Bridgestone Corporation, Tokyo 104-8340 (JP)
(72) Inventor: KAJIMOTO Katsuhiko, Kodaira-shi Tokyo 187-0031 (JP)
(74) Representative: Waldren, Robin Michael
(86) International application number: PCT/JP2012/053721
(87) International publication number: WO 2012/111776

(57) **Abstract**

Provided is a pneumatic tire for a motorcycle that suppresses the occurrence of a crack at a groove bottom in a shoulder region while achieving a good balance between straight-running stability, abrasion resistance, grip performance during cornering, and cornering stability. The pneumatic tire for a motorcycle is provided with a ring-shaped tread section 13. The tread section 13 includes a base rubber layer 4 and a cap rubber layer 5 that is arranged on both ends in a tire widthwise direction, and has a structure in which the base rubber layer 4 and the cap rubber layer 5 are laminated in order. A rubber of the cap rubber layer 5 has a lower hardness than a rubber of the base rubber layer 4, and a thickness "d" of the cap rubber layer 5 at a groove bottom in the shoulder region is not less than 1.0 mm.

## Description

### TECHNICAL FIELD

The present invention relates to a pneumatic tire for a motorcycle (hereinafter referred to also simply as "tire"), and more particularly, to a pneumatic tire for a motorcycle that suppresses the occurrence of a crack at a groove bottom in a shoulder region while achieving a good balance between straight-running stability, abrasion resistance, grip performance during cornering, and cornering stability.

### BACKGROUND ART

Conventionally, in order to achieve a balance between running stability and grip force during straight running, a tread section of a pneumatic tire for a motorcycle has a structure in which a crown center region includes a highly stable compound having relatively high rigidity and a shoulder region includes a soft compound having high grip force. Such a structure above has been examined in various ways.

For example, Patent Document 1, which is directed to improve straight-running stability and abrasion resistance, as well as grip performance and cornering stability during cornering running on a wet road surface, proposes a tire in which a base rubber is exposed on a tread surface in a center region and only a shoulder region has a cap rubber (a so-called cap/base structure), where the base rubber and the cap rubber, respectively, are a hard rubber and a soft rubber, respectively. In addition, Patent Document 2 proposes a motorcycle tire that achieves a balance between grip performance and cornering stability during cornering by arranging a rubber having high abrasion resistance in a center region and forming a shoulder region that meets a road surface during cornering so as to have a cap/base structure. Furthermore, Patent Document 3 proposes a motorcycle tire in which a tread rubber with low loss tangent (tan δ) is arranged from a center region and continuously through a carcass side in a shoulder region or, except for the shoulder region, discontinuously therefrom, and a tread rubber with high loss tangent (tan δ) is arranged in the shoulder region.

### RELATED ART DOCUMENTS

### PATENT DOCUMENTS

Patent Document 1: Japanese Unexamined Patent Application Publication No. H11-189010
Patent Document 2: Japanese Unexamined Patent Application Publication No. 2005-271760
Patent Document 3: Japanese Unexamined Patent Application Publication No. S60-94804

### SUMMARY OF THE INVENTION

### PROBLEM TO BE SOLVED BY THE INVENTION

Usually, from the viewpoint of drainability, the shoulder region of a pneumatic tire for a motorcycle is provided with grooves. However, there is a problem in the pneumatic tires for motorcycle including the shoulder region having the cap/base structure with the hardness difference. When the cap rubber of the shoulder region is thinner than a groove depth of the shoulder region, the cap rubber at a groove bottom results in a thin skin-like state of about 0.5 mm, thus causing sudden change in rubber rigidity at the thin skin portion. Accordingly, a crack easily occurs at the cap rubber portion of the groove bottom.

Therefore, it is an object of the present invention to provide a pneumatic tire for a motorcycle that suppresses the occurrence of a crack at a groove bottom in a shoulder region while achieving a good balance between straight-running stability, abrasion resistance, grip performance during cornering, and cornering stability.

### MEANS FOR SOLVING THE PROBLEMS

The present inventor conducted extensive and intensive research to solve the above problem and found that in a specific cap/base structure, by arranging a cap rubber layer having a predetermined range of thickness in a shoulder region, the occurrence of a crack at a groove bottom in the shoulder region can be suppressed while achieving a good balance between straight-running stability, abrasion resistance, grip performance during cornering, and cornering stability, thereby leading to the completion of the present invention.

Specifically, a pneumatic tire for a motorcycle of the present invention is a pneumatic tire for a motorcycle provided with a ring-shaped tread section, characterized in that the tread section includes a center region composed of a single layer of a base rubber layer and a shoulder region in which the base rubber layer and a cap rubber layer are laminated in order, in which a rubber of the cap rubber layer has a lower hardness than a rubber of the base rubber layer and a thickness of the cap rubber layer at a groove bottom in the shoulder region is not less than 1.0 mm. As used herein, the term "hardness" means a Shore A hardness at 25°C and can be measured using a commercially available hardness tester.

In the present invention, preferably, the rubber of the cap rubber layer has a hardness lower by not less than 2° and less than 6° than the rubber of the base rubber layer. When the rubber of the cap rubber layer has a hardness lower by not less than 6° than the rubber of the base rubber layer, the thickness of the cap rubber layer at the groove bottom in the shoulder region is preferably not less than 1.5 mm.

Additionally, in the present invention, preferably, a loss tangent tan δ at 60°C of the rubber of the cap rubber layer is from 0.20 to 0.45 and a tan δ at 60°C of the rubber of the base rubber layer is from 0.05 to 0.36.

### EFFECTS OF THE INVENTION

The present invention can provide a pneumatic tire for a motorcycle that suppresses the occurrence of a crack at a groove bottom in a shoulder region while achieving a good balance between straight-running stability, abrasion resistance, grip performance during cornering, and cornering stability.

### BRIEF DESCRIPTION OF THE DRAWINGS

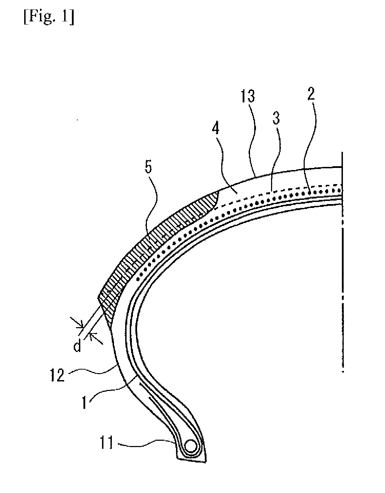

FIG. 1 is a left half cross-sectional view of a pneumatic tire for a motorcycle according to a suitable embodiment of the present invention.

### MODE FOR CARRYING OUT THE INVENTION

Hereinbelow, embodiments of the present invention will be described in detail.

FIG. 1 is a left half cross-sectional view of a pneumatic tire for a motorcycle according to a suitable embodiment of the present invention. As depicted in the drawing, the tire of the invention is provided with a pair of bead regions 11, a pair of sidewall regions 12 continued thereto, and a tread section 13 continued between both sidewall regions, and includes a carcass composed of at least one layer of a carcass ply 1 (two layers of carcass plies 1 in the drawing example) reinforcing the respective regions between the mutual bead regions 11, and a belt layer 2 arranged outside in a tire radial direction of the carcass and including a reinforcing cord wound circumferentially in a spiral shape. In addition, the tread section 13 is provided with grooves and a broken line indicates a groove bottom 3.

The tire of the present invention includes a center region composed of a single layer of a base rubber layer 4 and a shoulder region in which the base rubber layer 4 and a cap rubber layer 5 are laminated in order. In other words, the base rubber layer 4 is exposed on a tread surface in the center region. In the present invention, a rubber of the cap rubber layer 5 has a lower hardness than a rubber of the base rubber layer 4. This structure can improve cornering stability on a road, without reducing both the abrasion resistance and straight-running stability and the gripping force of the tread section 13 during cornering running on the road in the tire provided with the cap/base structure.

The tire of the present invention has the grooves in the tread section 13. As described above, in order o suppress the occurrence of a crack at the groove bottom 3 in the shoulder region, the cap rubber layer 5 needs to have a thickness not less than a predetermined thickness. Specifically, in the present invention, the rubber of the cap rubber layer 5 has a lower hardness than the rubber of the base rubber layer 4 and a thickness "d" of the cap rubber layer 5 is not less than 1.0 mm. By satisfying the above relationship, rigidity change in the groove bottom 3 of the shoulder region can be moderated, whereby the occurrence of a crack can be suppressed.

In a suitable embodiment of the present invention, the rubber of the cap rubber layer 5 has a hardness lower by not less than 2° and less than 6° than the rubber of the base rubber layer 4 and the thickness "d" of the cap rubber layer 5 at the groove bottom 3 in the shoulder region is not less than 1.0 mm. In addition, in another suitable embodiment of the present invention, when the cap rubber layer 5 has a rubber hardness lower by not less than 6° than the rubber of the base rubber layer 4, the thickness "d" of the cap rubber layer 5 at the groove bottom in the shoulder region is preferably not less than 1.5 mm in terms of attaining the intended advantages of the present invention. In this case, suitably, the cap rubber layer has a rubber hardness lower by from 6 to 14° than the base rubber layer and the distance "d" is from 1.5 to 2.5 mm. The harnesses of the cap rubber and the base rubber can be attained by selecting a rubber composition and a filler therefor as needed according to a usual method.

In the present invention, preferably, a tan δ at 60°C of the rubber of the cap rubber layer 5 is from 0.20 to 0.45 and a tan δ at 60°C of the rubber of the base rubber layer 4 is from 0.05 to 0.36. By determining the range of the tan δ at 60°C of each of the rubber of the base rubber layer 4 and the rubber of the cap rubber layer 5, straight-running stability, abrasion resistance, grip performance during cornering, and cornering stability can be further improved.

In addition, a ratio of a rubber thickness of the cap rubber layer 5 in the shoulder region to a tread rubber thickness is preferably in a range of from 10 to 30%. In other words, when the ratio is less than 10%, it is difficult to ensure cornering stability. Additionally, when the ratio exceeds 30%, it tends to be difficult to secure a gauge of 1 mm between the cap rubber and the groove bottom that is necessary to obtain resistance to a crack at the groove bottom. Furthermore, when it is necessary to further improve grip force on a wet road, silica-containing rubber can be used for the cap rubber layer 5.

Additionally, a ratio of a surface length of a center region tread to a surface length of a tread section tread is preferably in a range of from 20 to 50%. In other words, when the ratio is below 20%, straight-running stability is likely to be degraded, whereas when the ratio exceeds 50%, grip force during cornering is likely to be reduced.

In the present invention, as long as the tread section 13 satisfies the predetermined relationship described above, other conditions such as a detail of the tire structure and material are not particularly limited. For example, as the belt layer 2, a so-called spiral belt can be suitably used that is formed by spirally winding an elongated rubber-coated cord (not shown) composed of a single cord with rubber or a belt-shaped ply (not shown) having a plurality of cords coated with rubber, in which a cord direction is substantially a tire circumferential direction. The reinforcing cord to be used can be selected as needed from, in addition to steel cords, cords of organic fibers such as aromatic polyamide (aramid, e.g. trade name: Kevlar manufactured by DuPont Inc.), polyethylene naphthalate (PEN), polyethylene terephthalate (PET), rayon, Zylon (registered trademark) (polyparaphenylene benzobisoxazole (PBO) fiber), and aliphatic polyamide (nylon), as well as materials such as glass fiber and carbon fiber. In order to ensure high levels of straight-running stability and high-speed durability, the reinforcing cord to be used is preferably a steel cord having high rigidity and capable of stabilizing the movement of the tread.

In addition, for example, as indicated in the drawing, a bead core is embedded in each of the pair of bead regions 11 of the tire of the invention and the carcass 1 is engaged after folding back from the inside of the tire to the outside thereof around the bead core. Furthermore, a tread pattern is formed as needed on a surface of the tread section 13, and an inner liner (not shown) is formed in an innermost layer.

The tire of the present invention is applicable to both front and rear tires of motorcycles, particularly suitable as a rear tire.

### EXAMPLES

The present invention will be described in more detail hereinbelow with reference to Examples.

### <Examples 1 to 8, Conventional Example, and Comparative Examples 1 and 2>

A pneumatic tire for a motorcycle having the cross-sectional structure depicted in FIG. 1 was produced with a tire size of 160/60ZR17M/C. Tables 1 and 2 below indicate physical properties of the base rubber layer 4 and the cap rubber layer 5 and the distance between the groove bottom and the base rubber in the shoulder region. The carcass 1 was composed of two layers and the reinforcing cord used was made of nylon and arranged at 90° with respect to the tire circumferential direction. In addition, the belt layer 2 used was a monospiral belt formed by spirally winding a rubber-coated steel cord. A ratio of a cap rubber gauge to a tread gauge in the shoulder region was 30%. A boundary between the cap rubber layer and the base rubber layer on the tread surface was set to 25% of a tread end from a tread center. Regarding the obtained tire, tests on the following items were performed for evaluation. The loss tangents (tan δ) of the cap rubber layer and the base rubber layer were measured using a viscometer manufactured by Rheometrics, Inc., under conditions including a temperature of 60°C, a frequency of 15 Hz, and a strain of 5%.

### <Groove Bottom Crack Resistance>

Each tire was mounted on a rim of MT4.50-17M/C and subjected to a drum test. A running distance where a crack occurred in the groove bottom was calculated and indicated by index. Larger index values indicate higher groove bottom crack resistance. Conditions for the drum test are as follows:
Inner pressure: 290 kPa
Load: 3.19 kN
Speed: 50 km/h

### <Straight-Running Stability, Grip Performance during Cornering, and Cornering Stability>

Each tire was mounted on a standard rim to form a tire wheel, which was then installed in a rear wheel of the tire wheel motorcycle, and then an actual running test of the motorcycle was conducted on a predetermined test road to perform feeling evaluation by a driver regarding straight-running stability, grip performance during cornering, and cornering stability. The obtained results were evaluated with respect to the results of Conventional Example set as an index of 100. Larger index values indicate more excellent results. Tables 1 and 2 indicate the obtained results.

### <Abrasive Resistance>

The weight of the tire was measured before the actual running test of the motorcycle, and then, after the test, rubber residue and foreign matter such as pebbles adhered on the tire were cleanly removed and the weight of the tire was measured to evaluate using, as an amount of abrasion, a weight difference from the weight of a new product. The amount of abrasion in each sample tire was compared using an index with respect to 100 of the amount of abrasion obtained in the tire of the Conventional Example. Smaller index values indicate less abrasion. The results are also listed in Tables 1 and 2.

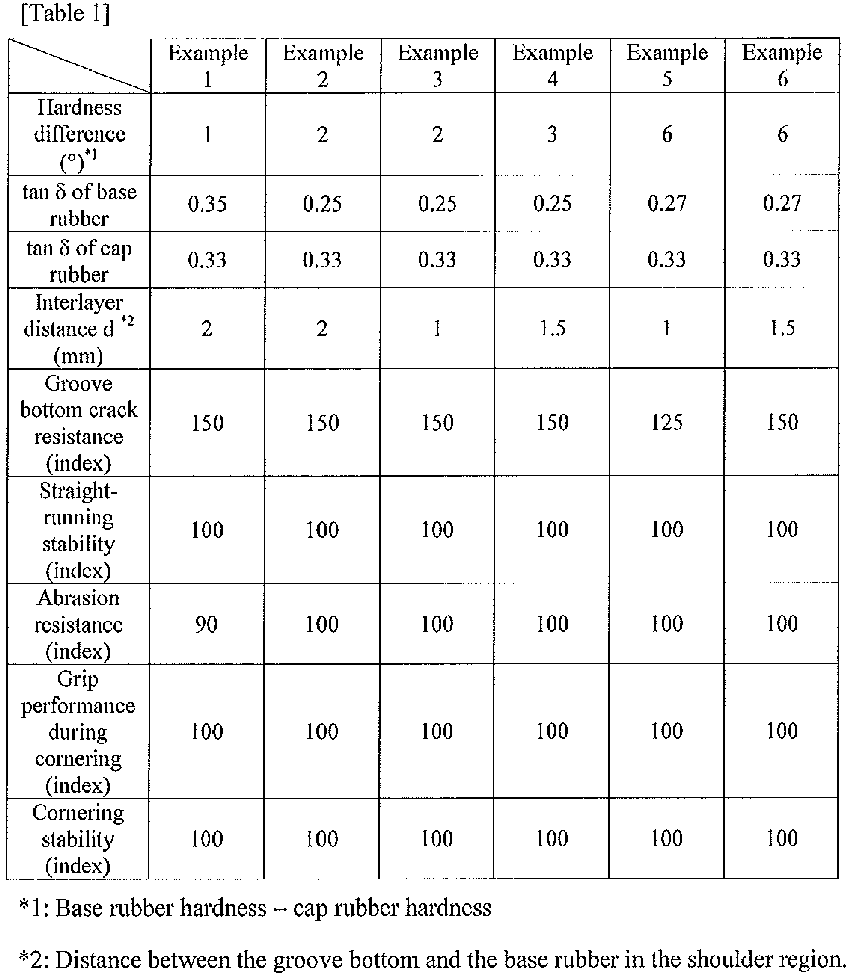

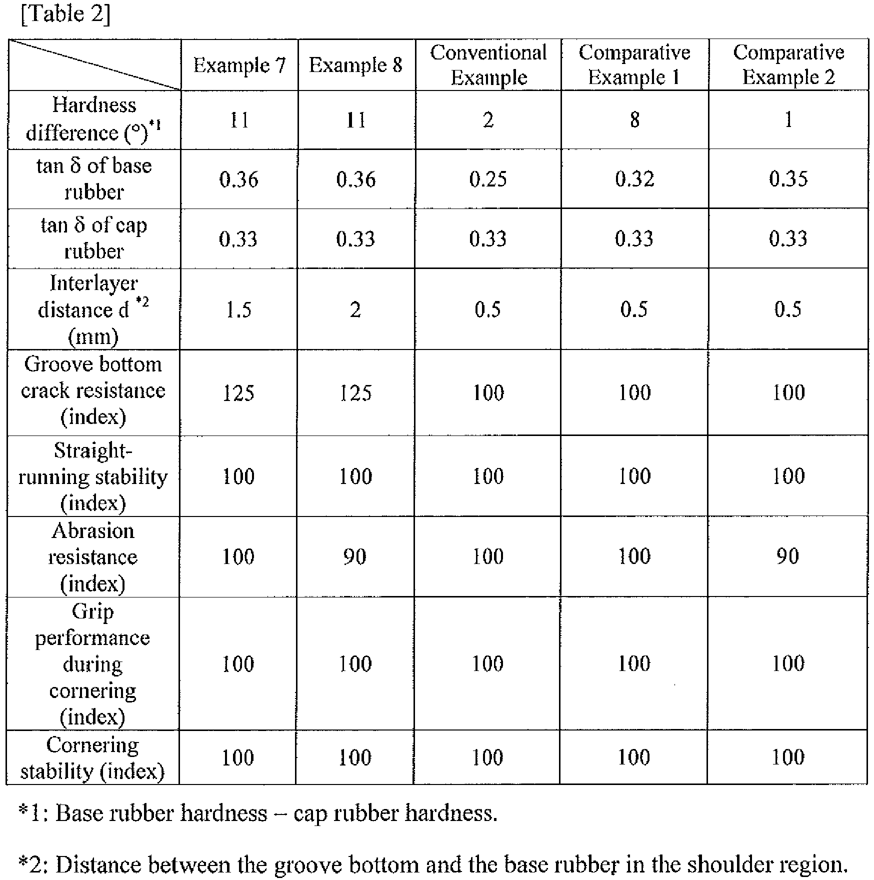

From Tables 1 and 2 above, it is obvious that the pneumatic tire for a motorcycle of the present invention can suppress the occurrence of a groove bottom crack in the shoulder region while achieving a good balance between straight-running stability, abrasion resistance, grip performance during cornering, and cornering stability.

### DESCRIPTION OF SYMBOLS

1: Carcass ply
2: Belt layer
3: Groove bottom
4: Base rubber layer
5: Cap rubber layer
11: Bead region
12: Sidewall region
13: Tread section

## Claims

1. A pneumatic tire for a motorcycle provided with a ring-shaped tread section, **characterized in that** the tread section comprises a center region composed of a single layer of a base rubber layer and a shoulder region in which a base rubber layer and a cap rubber layer are laminated in order, wherein a rubber of the cap rubber layer has a lower hardness than a rubber of the base rubber layer and a thickness of the cap rubber layer at a groove bottom in the shoulder region is not less than 1.0 mm.

2. The pneumatic tire for a motorcycle according to claim 1, wherein the rubber of the cap rubber layer has a hardness lower by not less than 2° and less than 6° than the rubber of the baser rubber layer.

3. The pneumatic tire for a motorcycle according to claim 1, wherein the rubber of the cap rubber layer has a hardness lower by not less than 6° than the rubber of the baser rubber layer and the thickness of the cap rubber layer at the groove bottom in the shoulder region is not less than 1.5 mm.

4. The pneumatic tire for a motorcycle according to claim 1, wherein a loss tangent tan δ at 60°C of the rubber of the cap rubber layer is from 0.20 to 0.45 and a tan δ at 60°C of the rubber of the base rubber layer is from 0.05 to 0.36.
